(19) Europäisches Patentamt
European Patent Office
Office européen des brevets

(11) Veröffentlichungsnummer : **0 027 887**
**B1**

(12) # EUROPÄISCHE PATENTSCHRIFT

(45) Veröffentlichungstag der Patentschrift : **11.05.83**

(51) Int. Cl.³ : **C 09 B 29/085**, D 06 P 1/18, D 06 P 3/00// C07C143/72

(21) Anmeldenummer : **80105527.8**

(22) Anmeldetag : **15.09.80**

(54) **Azofarbstoffe, deren Herstellung und Verwendung zum Färben von Synthesefasern.**

(30) Priorität : **25.09.79 DE 2938633**

(43) Veröffentlichungstag der Anmeldung : **06.05.81 Patentblatt 81/18**

(45) Bekanntmachung des Hinweises auf die Patenterteilung : **11.05.83 Patentblatt 83/19**

(84) Benannte Vertragsstaaten : **BE CH DE FR GB IT LI**

(56) Entgegenhaltungen :
**FR A 2 318 205**
**FR A 2 383 924**
**US A 3 405 118**

**Die Akte enthält technische Angaben, die nach dem Eingang der Anmeldung eingereicht wurden und die nicht in dieser Patentschrift enthalten sind.**

(73) Patentinhaber : **BAYER AG**
**Zentralbereich Patente, Marken und Lizenzen**
**D-5090 Leverkusen 1, Bayerwerk (DE)**

(72) Erfinder : **Hamprecht, Rainer, Dr.**
**Saarstrasse 4**
**D-5000 Koeln 40 (DE)**
Erfinder : **Leverenz, Klaus, Dr.**
**Heymannstrasse 44**
**D-5090 Leverkusen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 027 887 B1

Azofarbstoffe, deren Herstellung und Verwendung zum Färben von Synthesefasern

Gegenstand der Erfindung sind Dispersionsazofarbstoffe der Formel

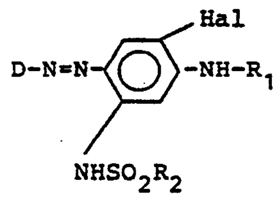

(I)

worin

D den Rest einer Diazokomponente der Benzolreihe,

Hal Cl oder Br

$R_1$ einen gesättigten oder ungesättigten $C_1$-$C_{10}$-Alkyl- oder $C_5$-$C_8$-Cycloalkylrest, der durch OH, Halogen, Alkoxy, Aryloxy oder Acyloxy substituiert sein kann und

$R_2$ einen gegebenenfalls substituierten und gegebenenfalls ungesättigten Alkylrest, ggf. substituierten Aryl- oder Hetarylrest bedeuten, wobei die genannten Reste frei von wasserlöslichmachenden Gruppen (—$SO_3H$, —$CO_2H$) sind.

Bevorzugte Reste benzolischer Diazokomponenten sind solche der Formel

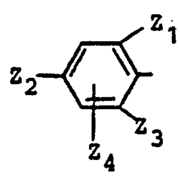

worin

$Z_1$-$Z_4$ Wasserstoff, Alkyl, Cycloalkyl, Aralkyl, Halogen, —CN, —$NO_2$, —$CF_3$, —$SO_2Q$, $SO_2NVW$, —COW, —CONVW, —$CO_2W$, —OQ, —NVW, —NWCOW, —$NWSO_2Q$, —$NHCO_2Q$,

$Z_2$ außerdem Arylazo und

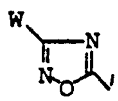 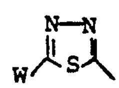 oder 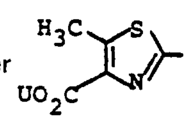

$Z_3$ außerdem

bedeuten, und

$Z_3$ mit $Z_4$ gemeinsam die restlichen Glieder eines ankondensierten Heterocyclus, wie

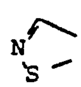 oder 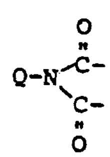

bilden können, wobei

Q = Alkyl, Aralkyl, Aryl

U = Alkyl und

V = H, Alkyl, Aralkyl,

W = V oder Aryl bedeuten.

Geeignetes Alkyl ist — sofern nicht anders definiert — $C_1$-$C_{10}$-Alkyl, vorzugsweise $C_1$-$C_4$-Alkyl, das durch Halogen, CN, Alkoxy, OH u. a. substituiert sein kann.

Vorzugsweise ist Alkyl : Methyl, Ethyl, n-Propyl, n-Butyl, n-Pentyl und n-Hexyl.

Ungesättigtes Alkyl ist $C_2$-$C_{10}$-Alkenyl, insbesondere $C_3$-$C_5$-Alkenyl, das gegebenenfalls durch Halogen substituiert sein kann.

Bevorzugtes Halogen ist Br und vor allem Cl.

Geeignetes Alkoxy ist $C_1$-$C_4$-Alkoxy.

Diazotierung und Kupplung werden nach üblichen, in der Farbstoffchemie bekannten Verfahren ausgeführt (vgl. z. B. DE-A 26 32 203).

Zur Darstellung von Farbstoffen der Formel I, die in o-Stellung der Diazokomponente eine oder zwei Cyangruppen tragen, stellt man vorzugsweise erst durch Kupplung diazotierter Aniline der Formel

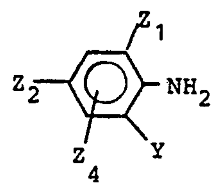

(VI)

worin

$Z_1$-$Z_4$ die vorbeschriebene Bedeutung haben und

Y Cl, Br oder J bedeutet auf Kupplungskomponenten der Formel V die entsprechenden o-Halogenazofarbstoffe

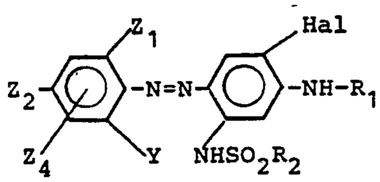

(VII)

her und überführt diese durch ein- oder im Falle der o.o-Dihalogenazofarbstoffe zweimalige nukleophile Substitution mit Cyaniden in die Farbstoffe der Formel VII, worin Y und bei zweimaligem Austausch auch $Z_1$ Cyan bedeuten und im übrigen $Z_1$, $Z_2$, $Z_4$, Hal, $R_1$ und $R_2$ die vorgenannte Bedeutung haben.

Auch diese Verfahren sind allgemein bekannt, vergl. z. B.

US 3 627 752
US 3 772 268
US 3 821 195
US 3 876 621
US 3 978 040
US 4 045 430
GB 1 184 825

und auch auf heterocyclische Azofarbstoffe übertragbar, z. B. zur Darstellung von o-Cyan-pyrazolylazofarbstoffen gemäß DE-A 27 27 268.

Bevorzugt einzusetzende Cyanide sind CuCN gegebenenfalls in Mischung mit Zinkcyaniden sowie komplexe Cu-I-cyanide. Nach analogen Verfahren können weiterhin in Farbstoffe der Formel VII worin $Z_1$-$Z_4$, Hal, $R_1$ und $R_2$ die vorbeschriebene Bedeutung haben und Y Cl, Br, J bedeutet, durch ein- oder zweimaligen Halogen-, Nitrit- oder Halogen-Sulfinat-austausch ein oder zwei Nitrogruppen oder Sulfongruppen unter Substitution von y und gegebenenfalls $Z_1$ eingeführt werden.

Auch die Diazokomponenten sind allgemein bekannt (vgl. z. B. BE 643 774, BE 660 461).

Geeignete Diazokomponenten sind beispielsweise

2-Chlor-4-nitro-anilin
2-Cyan-4-nitro-anilin
2,4-Dinitro-anilin
2,4-Dicyan-anilin
4-Nitro-anilin
2-Nitro-anilin
2-Amino-5-nitro-benzoesäuremethylester
2,6-Dibrom-4-methyl-anilin
2,6-Dibrom-4-methoxy-anilin
2,4,6-Tribrom-anilin
2,4,6-Trichloranilin
2,6-Dibrom-4-trifluormethylanilin
2-Trifluormethyl-4-nitro-anilin
2-Brom-4-nitro-anilin
2,6-Dibrom-4-nitro-anilin
2,6-Dibrom-4-phenylazo-anilin

2-Brom-4,6-dinitro-anilin
2-Chlor-4,6-dinitro-anilin
2-Methylsulfonyl-4-nitro-anilin
2-Methylsulfonyl-4-nitro-6-brom-anilin
2-Cyan-4,6-dinitro-anilin
2,4-Bis-Methylsulfonyl-anilin
2-Chlor-4-nitro-6-cyan-anilin
2-Chlor-4-methylsulfonyl-anilin

Die Herstellung der Kupplungskomponenten ist bislang nicht in der Literatur beschrieben worden. Man erhält diese z. B. dadurch, daß man Halogen-m-phenylen-diamine der Formel VIII

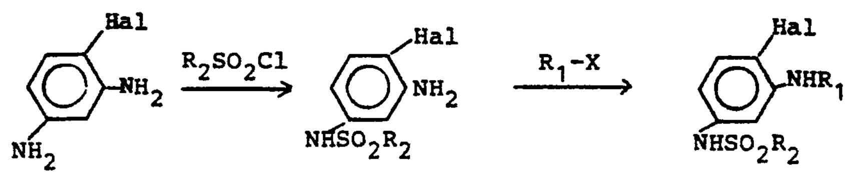


(VIII) (IX) (V)

in protischen oder aprotischen Lösungsmitteln, vorzugsweise im neutralen bis sauren Bereich (pH = 3-7) mit Sulfochloriden $R_2SO_2Cl$ in die Sulfonamide IX überführt und dann mit Alkylierungsmitteln $R_1$-X, worin

X = Cl, Br, J, $OSO_3$-Alkyl, $OSO_2$Alkyl, $OSO_2$-Aryl, OP $(OAlkyl)_2$

bedeutet, im wäßrigen oder im organischen Medium, vorzugsweise im sauren Bereich (pH = 3-6,5), zu den Kupplungskomponenten V umsetzt.

In dem Falle, daß die Kupplungskomponente V in $R_1$ eine β-Hydroxygruppe enthält, benutzt man zur Alkylierung von VIII zweckmäßigerweise Epoxyde wie z. B. Ethylenoxid, Propylenoxid, Epichlorhydrin, Glycid, Butylen-1,2-oxid, Butylen-1,3-oxid. Auch diese Oxalkylierung wird vorzugsweise im sauren Bereich ausgeführt.

Eine weitere Möglichkeit zur Darstellung der Kupplungskomponenten V bietet die reduktive Alkylierung von IX mit Carbonylverbindungen in Gegenwart von Hydrier-Katalysatoren wie z. B. Raney-Nickel oder Platin/A-Kohle. Insbesondere Cyclopentyl-, Cyclohexyl- oder 2-Ethyl-hexyl-reste lassen sich so gut einführen.

Weiterhin ist es auch möglich, zur reduktiven Alkylierung mit Carbonylverbindungen Zwischenprodukte der Formel

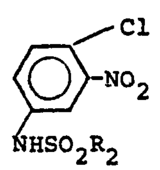

(X)

einzusetzen.

Geeignete Kupplungskomponenten sind beispielsweise
1-Chlor-2-propylamino-4-methan-sulfonamido-benzol
1-Chlor-2-(n)-butylamino-4-methan-sulfonamido-benzol
1-Chlor-2-(n)-pentylamino-4-methan-sulfonamido-benzol
1-Chlor-2-(n)-hexylamino-4-methan-sulfonamido-benzol
1-Chlor-2-(n)-octylamino-4-methan-sulfonamido-benzol
1-Chlor-2-(n)-hexylamino-4-tosylamido-benzol
1-Chlor-2-(n)-pentylamino-4-butansulfonamido-benzol
1-Chlor-2-(n)-butylamino-4-vinylsulfonamido-benzol
1-Chlor-2-(n)-butylamino-4-chlormethansulfonamido-benzol
1-Brom-2-(n)-butylamino-4-methansulfonamido-benzol
1-Chlor-2-(n)-butylamino-4-(4'-chlor)-benzolsulfonamido-benzol
1-Chlor-2-ethoxy-ethylamino-4-methansulfonamido-benzol
1-Chlor-2-(3'-chlor-buten-2'-yl)-amino-4-methansulfonamido-benzol
1-Chlor-2-(4'-chlorbutyl)-amino-4-methansulfonamido-benzol.

Die neuen Farbstoffe zeichnen sich durch ein gutes Ziehvermögen aus und eignen sich daher

vorzüglich zum Färben und Bedrucken von Synthesefasern, insbesondere Celluloseester-, Superpolyamid- und vor allem Polyesterfasern, auf denen sie Färbungen mit guten Echtheiten und einem besonders klaren Farbton ergeben.

Aus der FR-A 2 383 924 sind zwar schon Azofarbstoffe mit einer 3-Sulfonylamino-anilin-Kupplungskomponente — ganz allgemein — bekannt. Die in dieser Patentschrift beispielhaft beschriebenen Farbstoffe weisen jedoch nicht den charakteristischen Chlorsubstituenten in der Kupplungskomponente auf.

Beispiel 1

Herstellung des Farbstoffs der Formel

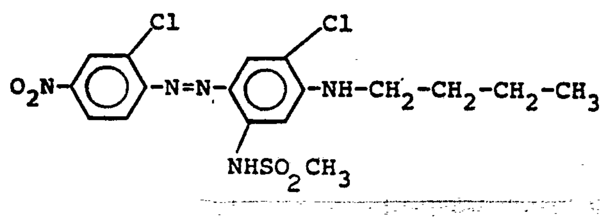

5 g 2-Chlor-4-nitroanilin werden in 40 ml Eisessig und 20 ml Propionsäure gelöst und bei 0-5 °C innerhalb von 30 Minuten mit 6,2 ml Nitrosylschwefelsäure (40 proz. Lösung in Schwefelsäure) versetzt. Man läßt eine Stunde bei 5 °C nachrühren und gießt dann die Diazotierung auf eine eiskalte Lösung von 8,5 g 1-Chlor-2-(n-butylamino)-4-methansulfonamido-benzol in 100 ml Eisessig und 20 ml 10 proz. Amidosulfonsäurelösung. Nach Zugabe von 100 ml Eiswasser wird mit Natriumacetat auf pH 2 gestellt, dann abgesaugt, mit Wasser gewaschen und getrocknet.

Ausbeute : 12,4 g

Das Massenspektrum zeigt die Massen
459 (56,9 %) und 461 (46,7 %). $\lambda_{max}$ = 500 nm

Der Farbstoff färbt Polyester in klarem Scharlach und guten Echtheiten, insbesondere Licht-, Sublimier- und Naßechtheiten.

Bei analoger oder ähnlicher Arbeitsweise erhält man die in nachfolgender Tabelle angegebenen Farbstoffe

| Beispiel-Nr. | Formel | Farbton auf Polyester | $\lambda_{max}$ [nm] |
|---|---|---|---|
| 2 | 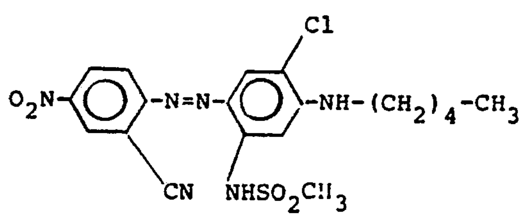 | blaust. Rot | 522 |
| 3 | 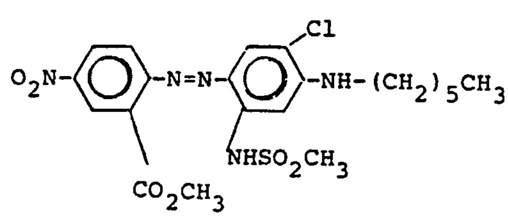 | rotst. Orange | 466 |
| 4 | 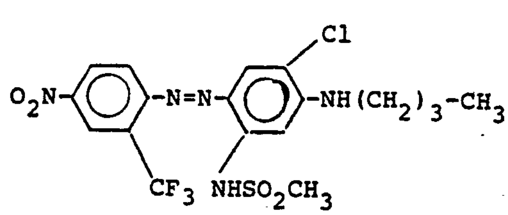 | Scharlach | 510 |

| Beispiel-Nr. | Formel | Farbton auf Polyester | $\lambda_{max}$ [nm] |
|---|---|---|---|
| 5 | 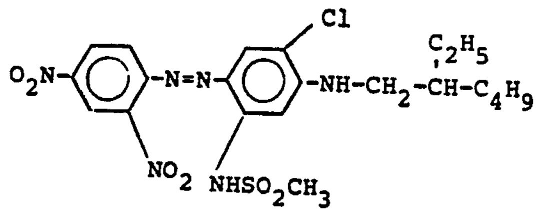 | Rot | 510 |
| 6 | 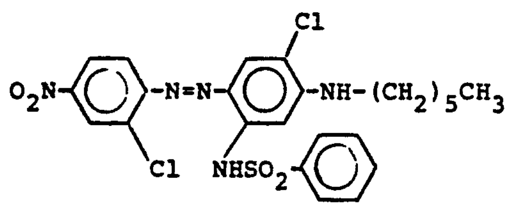 | Scharlach | 500 |
| 7 | 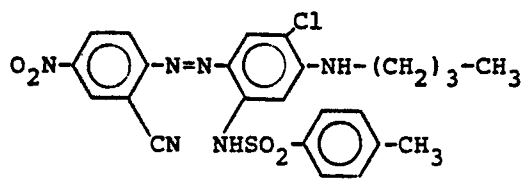 | blaust. Rot | 522 |
| 8 | 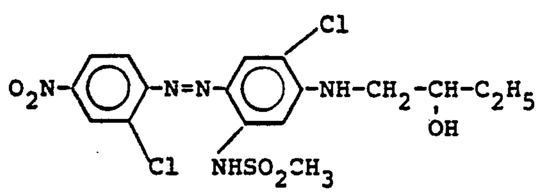 | Scharlach | 500 |
| 9 | 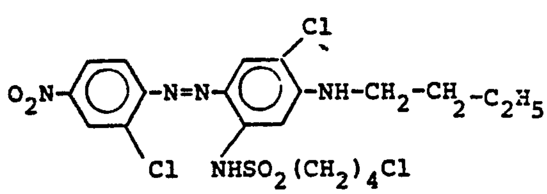 | Scharlach | 500 |
| 10 | 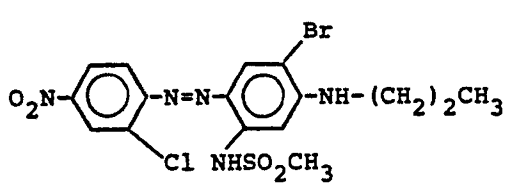 | Scharlach | 500 |
| 11 | 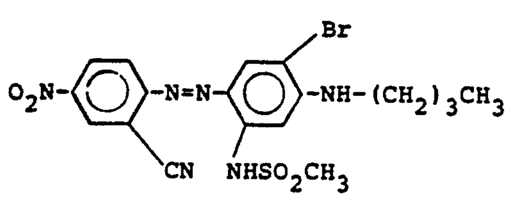 | blaust. Rot | 522 |

| Beispiel-Nr. | Formel | Farbton auf Polyester | λ max [nm] |
|---|---|---|---|
| 12 | 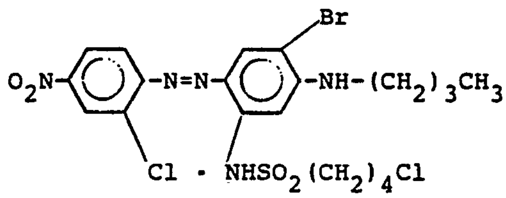 | Scharlach | 500 |
| 13 | 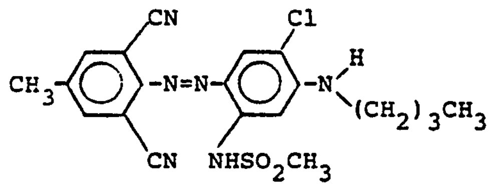 | Scharlach | 500 |
| 14 | 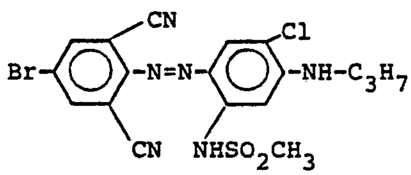 | Rot | 520 |
| 15 | 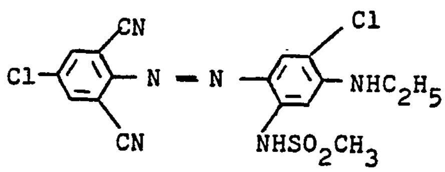 | Rot | 520 |
| 16 | 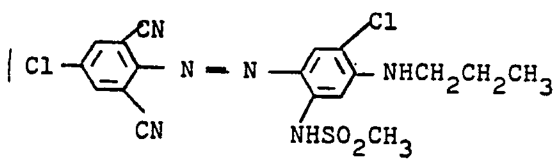 | Rot | 520 |

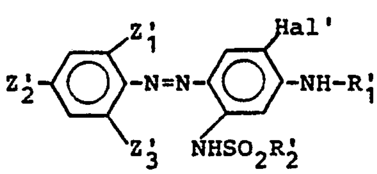

| Beisp. Nr. | $Z_1'$ | $Z_2'$ | $Z_3'$ | Hal' | $R_1'$ | $R_2'$ | Farbton auf Polyester |
|---|---|---|---|---|---|---|---|
| 1 | H | $NO_2$ | Cl | Cl | $C_2H_5$ | $CH_3$ | Scharlach |
| 2 | H | $NO_2$ | Cl | Cl | $n-C_3H_7$ | $CH_3$ | " |
| 3 | H | " | " | " | $n-C_5H_{11}$ | $CH_3$ | " |
| 4 | H | " | " | " | $n-C_8H_{17}$ | $CH_3$ | " |
| 5 | H | " | " | " | $n-C_3H_7$ | 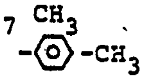 | " |

Fortsetzung

| Beisp. Nr. | $Z'_1$ | $Z'_2$ | $Z'_3$ | Hal' | $R'_1$ | $R'_2$ | Farbton auf Polyester |
|---|---|---|---|---|---|---|---|
| 6 | H | " | Br | " | n-$C_4H_7$ | 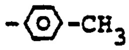 | " |
| 7 | H | " | " | Br | n-$C_4H_7$ | 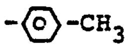 | " |
| 8 | H | " | CN | Cl | n-$C_3H_7$ | $CH_3$ | blaust. Rot |
| 9 | H | " | " | " | " | $C_2H_5$ | " |
| 10 | H | " | " | " | n-$C_5H_{11}$ | $-CH=CH_2$ | " |
| 11 | H | " | $SO_2CH_3$ | " | " | $CH_3$ | " |
| 12 | Cl | " | Cl | " | n-$C_4H_9$ | $CH_3$ | gelb-braun |
| 13 | Br | " | Br | " | " | n-$C_4H_9$ | gelb-braun |
| 14 | Br | $CH_3$ | Br | " | n-$C_3H_7$ | $CH_3$ | gelb |
| 15 | Br | Br | Br | " | " | " | gelb |
| 16 | H | $CH_3SO_2$ | Cl | " | " | " | Orange |
| 17 | H | $CH_3SO_2$ | Br | " | n-$C_4H_9$ | 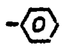 | Orange |
| 18 | CN | $NO_2$ | Br | " | n-$C_5H_{11}$ | $CH_3$ | Violett |
| 19 | CN | $NO_2$ | CN | " | n-$C_4H_9$ | $CH_3$ | rotst.Blau |
| 20 | CN | $NO_2$ | $NO_2$ | " | " | " | rotst. Blau |
| 21 | H | $NO_2$ | $NO_2$ | Cl | $C_2H_3OCH_3$ | $CH_3$ | Rot |
| 22 | H | $NO_2$ | Cl | Cl | $C_2H_4OC_2H_5$ | $CH_3$ | Scharlach |
| 23 | H | $NO_2$ | Cl | Cl | $-CH_2-CH=CH_2$ | $CH_3$ | " |
| 24 | H | $NO_2$ | Cl | Cl | $-(CH_2)_4Cl$ | $CH_3$ | " |
| 25 | H | $NO_2$ | Cl | Cl | $C_2H_4COCH_3$ | $C_2H_5$ | " |
| 26 | H | $NO_2$ | Cl | Cl | $C_2H_4OCOC_2H_5$ | $CH_3$ | " |
| 27 | H | $NO_2$ | CN | Cl | $C_2H_4OC_2H_5$ | $CH_3$ | blaust.Rot |
| 28 | H | $NO_2$ | CN | Cl | $-(CH_2)_4Cl$ | $CH_3$ | " " |
| 29 | H | $NO_2$ | CN | F | n-$C_3H_7$ | $CH_3$ | " " |
| 30 | H | $NO_2$ | Cl | F | n-$C_3H_7$ | $CH_3$ | Scharlach |
| 31 | CN | $CF_3$ | CN | Cl | n-$C_3H_7$ | $CH_3$ | Rot |
| 32 | CN | $C_6H_{11}$ | CN | Cl | n-$C_3H_7$ | $CH_3$ | Scharlach |
| 33 | CN | $CH_3$ | CN | Cl | $C_6H_{11}$ | $CH_3$ | " |
| 34 | H | $NO_2$ | Cl | Cl | $C_6H_{11}$ | $CH_3$ | Scharlach |
| 35 | H | $NO_2$ | Br | Cl | $C_6H_{11}$ | $CH_3$ | " |
| 36 | H | $NO_2$ | CN | Cl | $C_6H_{11}$ | $CH_3$ | blaust. Rot |
| 37 | H | $NO_2$ | Cl | Cl | $C_2H_4OCONHC_4H_9$ | $CH_3$ | Scharlach |
| 38 | H | $NO_2$ | Cl | Cl | $C_2H_4OCONHC_6H_5$ | $CH_3$ | " |

Beispiel 39

Darstellung von 1-Chlor-2-amino-4-methansulfonamidobenzol

a) 32,5 Schlämmkreide und 35,8 g 4-Chlor-1,3-diamino-benzol werden in 500 ml Wasser suspendiert. Durch Zugabe von Trockeneis und Eiskühlung wird auf 0 °C gekühlt und auf pH = 5,3 gebracht. Bei 0 °C läßt man in 3-4 Stunden eine eiskalte Lösung von 23 ml Methansulfochlorid in 125 ml Methanol zutropfen. Man läßt noch ca. 2 Stunden bei Raumtemperatur, nachrühren ehe man gemäß Beispiel 40 weiterverarbeitet.

b) 28,64 g 4-Chlor-1,3-diaminobenzol und 13 g Schlämmkreide werden in 100 ml Wasser und 100 ml Essigsäureethylester bei Raumtemperatur verteilt. Unter Rühren läßt man in 4 Stunden 17 ml Methansulfochlorid zutropfen. Man rührt weitere 12 Stunden bei Raumtemperatur, destilliert das Lösungsmittel ab, stellt mit verdünnter Schwefelsäure kongosauer, filtriert den entstandenen Gips ab und fällt das Reaktionsprodukt durch Zugabe von Natronlauge aus dem Filtrat aus. Das erhaltene 1-Chlor-2-amino-4-methansulfonamid ist rein genug für weitere Umsetzungen gemäß Beispiel 40.

c) 35,8 g 4-Chlor-1,3-diaminobenzol werden in 250 ml Wasser und 50 ml Methanol gut angerührt. Bei 0 °C läßt man in ca. 2 Stunden 23 ml Methansulfochlorid zutropfen ; durch Zutropfen von konz. Natronlauge wird pH = 4 gehalten. Man rührt ca. 2 Stunden bei Raumtemperatur nach und filtriert dann — gegebenenfalls nach Verdünnen mit Wasser — das abgeschiedene 1-Chlor-2-amino-4-methansulfonamido-benzol ab. Es ist rein genug für weitere Umsetzungen gemäß Beispiel 40.

Beispiel 40

Darstellung von 1-Chlor-2-butylamino-4-methansulfonamido-benzol

Das nach Beispiel 39a erhaltene Reaktionsgemisch wird bei 0 °C mit Kohlendioxid gesättigt, mit 50 g Schlämmkreide und 107 ml n-Butylbromid versetzt und im Autoklaven 30 Stunden auf 130 °C erhitzt. Nach Entspannen und Abkühlen wird mehrfach mit Methylenchlorid extrahiert. Die Extrakte werden über Natriumsulfat getrocknet und im Vakuum eingeengt. Ausbeute : 64,2 g.

Das Massenspektrum zeigt die Molmassen 276 und 278 in den Intensitäten 29,49 % und 11,31 %.

Anstelle von Schlämmkreide kann man selbstverständlich auch andere übliche Säureakzeptoren einsetzen.

Die übrigen bislang nicht beschriebenen Kupplungskomponenten der Formel V können in analoger Weise hergestellt werden.

**Ansprüche**

1. Azofarbstoffe der Formel

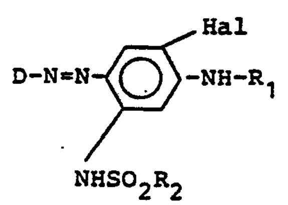

worin

D den Rest einer Diazokomponente der Benzolreihe,

Hal Cl oder Br,

$R_1$ einen gesättigten oder ungesättigten $C_1$-$C_{10}$-Alkyl- oder $C_5$-$C_8$-Cycloalkylrest, der durch OH, Halogen, Alkoxy, Aryloxy oder Acyloxy substituiert sein kann und

$R_2$ einen gegebenenfalls substituierten und gegebenenfalls ungesättigten Alkylrest, ggf. substituierten Aryl- oder Hetarylrest bedeuten,

wobei die genannten Reste $R_1$ und $R_2$ frei von wasserlöslich- machenden Gruppen ($—SO_3H$, $—CO_2H$) sind.

2. Azofarbstoffe gemäß Anspruch 1, worin D für

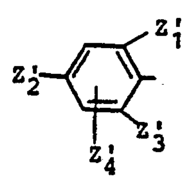

$R_1$ für gesättigtes n-$C_1$-$C_8$-Alkyl, das durch Cl oder $C_1$-$C_4$-Alkoxy substituiert sein kann,

$R_2$ für gesättigtes n-$C_1$-$C_6$-Alkyl, das durch Cl substituiert sein kann, für Phenyl, das durch Cl oder $C_1$-$C_4$-Alkyl ein oder zweimal substituiert sein kann, stehen, wobei

$Z'_1$ H, $—NO_2$, —CN, —Cl, —Br, $—SO_2—C_1C_4$-Alkyl, $CF_3$, $—CO_2$-Alkyl,

$Z'_2$ $Z_1$, $C_1$-$C_4$-Alkyl, Phenylazo

$Z'_3$ $Z'_1$
$Z'_4$ H, $C_1$-$C_2$-Alkyl oder Cl bedeuten.

3. Azofarbstoffe gemäß Anspruch 1 der Formel

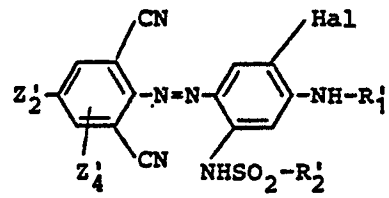

worin

$R'_1$ $C_1$-$C_6$-Alkyl, $C_1$-$C_6$-Chloralkyl, $C_1$-$C_4$-Alkoxy-($C_1$-$C_4$)-alkyl,
$R'_2$ $C_1$-$C_4$-Alkyl, $C_1$-$C_4$-Chloralkyl, Phenyl, Tolyl, Xylyl, Chlorphenyl, Dichlorphenyl,
Hal Cl oder Br,
$Z'_2$ H, Methyl, Ethyl, Cl, Br, $CF_3$
$Z'_4$ H, $CH_3$, Cl.

4. Azofarbstoffe gemäß Anspruch 1 der Formel

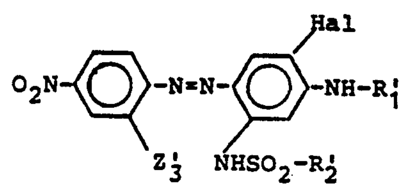

worin

Hal, $R'_1$, $R'_2$ die in Anspruch 3 genannte Bedeutung haben, und
$Z'_3$ H, Cl, Br, $NO_2$, CN, $CF_3$, —$CO_2$-Alkyl($C_1$-$C_4$), —$SO_2$-Alkyl($C_1$-$C_4$) bedeutet.

5. Azofarbstoffe gemäß Anspruch 3 und 4, worin
$R'_1$ $C_3$-$C_6$-Alkyl und
$R'_2$, Hal, $Z'_2$-$Z'_4$ die vorgenannte Bedeutung haben.

6. Verfahren zur Herstellung von Azofarbstoffen gemäß Anspruch 1, dadurch gekennzeichnet, daß man diazotierte aromatische Amine der Formel

$$D—NH_2$$

mit Kupplungskomponenten der Formel

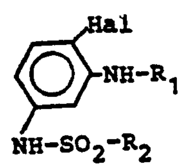

worin

D, $R_1$, $R_2$ und Hal die in Anspruch 1 genannte Bedeutung haben, vereinigt.

7. Verwendung von Azofarbstoffen gemäß Anspruch 1 zum Färben und/oder Bedrucken von Fasermaterialien.

**Claims**

1. Azo dyestuffs of the formula

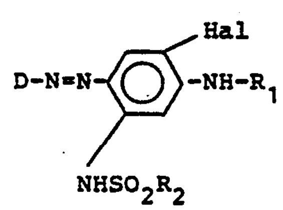

wherein

D denotes the radical of a diazo component of the benzene series,

Hal denotes Cl or Br,

$R_1$ denotes a saturated or unsaturated $C_1$-$C_{10}$-alkyl or $C_5$-$C_8$-cycloalkyl radical which can be substituted by OH, halogen, alkoxy, aryloxy or acyloxy and

$R_2$ denotes an optionally substituted and optionally unsaturated alkyl radical, or an optionally substituted aryl or hetaryl radical,

the radicals $R_1$ and $R_2$ mentioned being free from groups conferring solubility in water ($—SO_3H$ or $—CO_2H$).

2. Azo dyestuffs according to Claim 1, wherein D represents

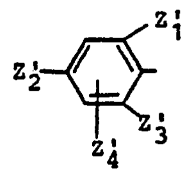

$R_1$ represents saturated n-$C_1$-$C_8$-alkyl, which can be substituted by Cl or $C_1$-$C_4$-alkoxy,

$R_2$ represents saturated n-$C_1$-$C_6$-alkyl, which can be substituted by Cl, or phenyl, which can be mono or di-substituted by Cl or $C_1$-$C_4$-alkyl, wherein

$Z'_1$ denotes H, $—NO_2$, —CN, —Cl, —Br, $—SO_2—C_1$-$C_4$-alkyl, $CF_3$ or $—CO_2$-alkyl,

$Z'_2$ denotes $Z'_1$, $C_1$-$C_4$-alkyl or phenylazo,

$Z'_3$ denotes $Z'_1$ or H and

$Z'_4$ denotes H, $C_1$-$C_2$-alkyl or Cl.

3. Azo dyestuffs according to Claim 1 of the formula

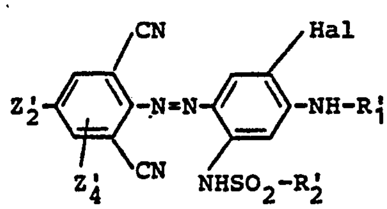

wherein

$R'_1$ denotes $C_1$-$C_6$-alkyl, $C_1$-$C_6$-chloroalkyl or $C_1$-$C_4$-alkoxy-($C_1$-$C_4$)-alkyl,

$R'_2$ denotes $C_1$-$C_4$-alkyl, $C_1$-$C_4$-chloroalkyl, phenyl, tolyl, xylyl, chlorophenyl, or dichlorophenyl,

Hal denotes Cl or Br,

$Z'_2$ denotes H, methyl, ethyl, Cl, Br or $CF_3$ and

$Z'_4$ denotes H, $CH_3$ or Cl.

4. Azo dyestuffs according to Claim 1 of the formula

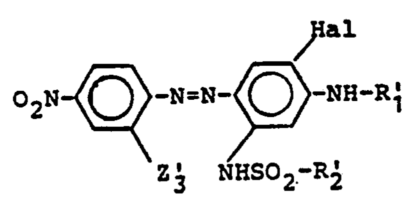

wherein

Hal, $R'_1$ and $R'_2$ have the meaning given in Claim 3 and

$Z'_3$ denotes H, Cl, Br, $NO_2$, CN, $CF_3$, $—CO_2—(C_1$-$C_4)$-alkyl or $—SO_2—(C_1$-$C_4)$-alkyl.

5. Azo dyestuffs according to Claims 3 and 4, wherein

$R'_1$ denotes $C_3$-$C_6$-alkyl and

$R'_2$, Hal and $Z'_2$-$Z'_4$ have the abovementioned meaning.

6. Process for the preparation of azo dyestuffs according to Claim 1, characterised in that diazotised aromatic amines of the formula

$$D—NH_2$$

are combined with coupling components of the formula

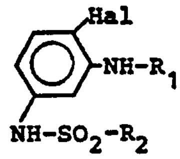

wherein

D, $R_1$, $R_2$ and Hal have the meaning given in Claim 1.

7. Use of azo dyestuffs according to Claim 1 for dyeing and/or printing fibre materials.

**Revendications**

1. Colorants azoïques de formule

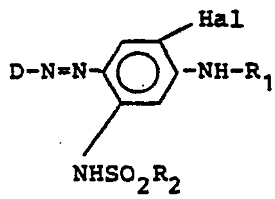

dans laquelle

D représente le radical d'un diazocomposant de la série benzénique,

Hal Cl ou Br,

$R_1$ un radical alcoyle en $C_1$-$C_{10}$ saturé ou insaturé ou un radical cycloalcoyle en $C_5$-$C_8$ qui peut être substitué par OH, halogène, alcoxy, aryloxy ou acyloxy et

$R_2$ un radical alcoyle éventuellement substitué et éventuellement insaturé, un radical aryle ou hétaryle éventuellement substitué, les radicaux cités $R_1$ et $R_2$ étant exempts de groupes hydrosolubilisants ($-SO_3H$, $-CO_2H$).

2. Colorants azoïques selon la revendication 1, où D représente

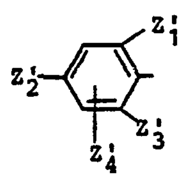

$R_1$ un n-alcoyle saturé en $C_1$-$C_8$ qui peut être substitué par Cl ou un alcoxy en $C_1$-$C_4$,

$R_2$ représente un n-alcoyle saturé en $C_1$-$C_6$ qui peut être substitué par Cl, un phényle qui peut être substitué une ou deux fois par Cl ou un alcoyle en $C_1$-$C_4$,

$Z_1'$ étant H, $-NO_2$, $-CN$, $-Cl$, $-Br$, $-SO_2$-alcoyle (en $C_1$-$C_4$), $CF_3$, $-CO_2$-alcoyle,

$Z_2'$ $Z_1$, alcoyle en $C_1$-$C_4$, phénylazo,

$Z_3'$ $Z_1'$,

$Z_4'$ H, alcoyle en $C_1$-$C_2$ ou Cl.

3. Colorants azoïques selon la revendication 1 de formule :

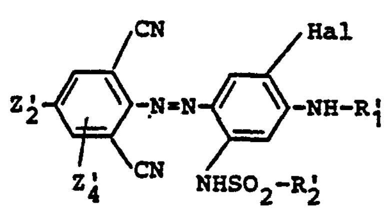

dans laquelle

$R_1'$ est un alcoyle en $C_1$-$C_6$, chloralcoyle en $C_1$-$C_6$, alcoxy($C_1$-$C_4$)-alcoyle en $C_1$-$C_4$,

$R_2'$ est un alcoyle en $C_1$-$C_4$, chloralcoyle en $C_1$-$C_4$, phényle, tolyle, xylyle, chlorophényle, dichlorophényle

Hal est Cl ou Br,

$Z_2'$ est H, méthyle, éthyle, Cl, Br, $CF_3$,

$Z_4'$ est H, $CH_3$, Cl.

4. Colorants azoïques selon la revendication 1 de formule :

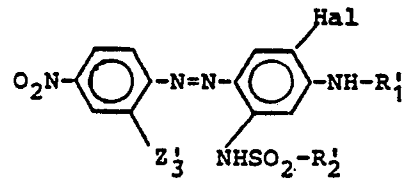

dans laquelle

Hal, $R_1'$, $R_2'$ ont la signification indiquée à la revendication 3 et

$Z_3'$ signifie H, Cl, Br, $NO_2$, CN, $CF_3$, —$CO_2$-alcoyle($C_1$-$C_4$), —$SO_2$-alcoyle($C_1$-$C_4$).

5. Colorants azoïques selon les revendications 3 et 4, où

$R_1'$ est un alcoyle en $C_3$-$C_6$ et

$R_2'$, Hal, $Z_2'$-$Z_4'$ ont la signification citée plus haut.

6. Procédé de fabrication de colorants azoïques selon la revendication 1, caractérisé en ce qu'on unit des amines aromatiques diazotées de formule

$$D—NH_2$$

à des composants de copulation de formule

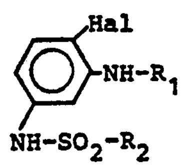

où

D, $R_1$, $R_2$ et Hal ont la signification citée à la revendication 1.

7. Utilisation des colorants azoïques selon la revendication 1 pour la teinture et/ou l'impression des matières fibreuses.